Europäisches Patentamt

European Patent Office

Office européen des brevets

(11) Numéro de publication: **0 388 339**
**A2**

# DEMANDE DE BREVET EUROPEEN

(21) Numéro de dépôt: 90470005.1

(22) Date de dépôt: **12.02.90**

(51) Int. Cl.5: **G01B 11/00, G01B 11/26**

(30) Priorité: 24.02.89 FR 8902628

(43) Date de publication de la demande:
**19.09.90 Bulletin 90/38**

(84) Etats contractants désignés:
**BE CH DE ES FR GB IT LI LU NL**

(71) Demandeur: **SYSPRO**
**91, avenue de la Libération**
**F-54000 Nancy(FR)**

(72) Inventeur: **Bris, Jean-Jacques**
**Rue de la Vitrée, Clos Saint-Michel**

**F-54700 Pont-a-Mousson(FR)**
Inventeur: **Bonnet, Patrick**
**45 Place de la Carrière**
**F-54000 Nancy(FR)**
Inventeur: **Richard, François-Noel**
**78 Avenue Anatole France**
**F-54000 Nancy(FR)**

(74) Mandataire: **Puit, Thierry et al**
**Centre de Recherches de Pont-à-Mousson**
**Service de Propriété Industrielle Boîte**
**Postale 109**
**F-54704 Pont-à-Mousson Cédex(FR)**

(54) Dispositif de reconnaissance de position d'objets.

(57) Procédé de reconnaissance de la position de colis (2) parmi un ensemble sur un support (3) au moyen d'un faisceau lumineux (1) émis obliquement par rapport à l'orientation du support dans lequel une fois qu'un premier colis a été identifié saisissable, un bras manipulateur vient immédiatement le saisir, l'idendification d'un second colis saisissable s'effectuant simultanément avec la manipulation du premier colis.

Dispositif permettant la mise en oeuvre de ce procédé.

Fig. 1

EP 0 388 339 A2

## "Dispositif de reconnaissance de position d'objets."

La présente invention a pour objet un procédé et dispositif de reconnaissance de la position de colis parmi un ensemble sur un support, par exemple des cartons sur palettes, en vue de leur saisie par un bras manipulateur, les colis étant de même nature et de dimension sensiblement identique.

Dans le cas de la manipulation d'objets en vue de les déplacer d'un endroit à un autre, il convient d'abord de repérer la position d'un objet saisissable, de le saisir et de le déplacer.

Ces opérations s'effectuent de plus en plus souvent de manière automatique par un bras manipulateur. Pour faire une telle opération, les paramètres de guidage du bras doivent être très bien maîtrisés. Il faut que la position de l'objet soit parfaitement identifiée, à savoir sa position exacte sur le support et son orientation.

Il est connu d'utiliser un procédé et dispositif de reconnaissance d'objets sur palette en vue de leur manipulation comportant des moyens d'identification constitués par un capteur et une source de lumière cohérente. La source de lumière envoie un faisceau plan sur les colis obliquement par rapport à l'orientation des colis, de largeur supérieure à la plus grande dimension de la palette. Le faisceau s'y réfléchit et trace une ligne brisée formée de plusieurs raies. L'analyse de chaque raie permet de déterminer les coordonnées de chacune de ses extrémités, coordonnées qui correspondent chacunes aux coordonnées d'un point d'une face verticale d'un colis.

La source est déplacée pas-à-pas au-dessus des colis balayant ainsi toute la surface de la palette.

L'analyse de toutes les lignes brisées permet de déterminer la position des colis.

L'inconvénient d'un tel dispositif réside dans le fait qu'on procède à un balayage pas-à-pas de toute la surface de la palette afin de déterminer la position de tous les colis saisissables avant que le bras manipulateur ne commence leur saisie. Ainsi, le bras manipulateur reste au repos jusqu'à ce que toutes les opérations de balayage pas-à-pas décrites ci-avant soient terminées ce qui représente un temps relativement important.

Enfin, un tel dispositif nécessite une installation relativement complexe notamment en matière de guidage. En effet, étant donné qu'il faut déplacer pas-à-pas le capteur et la source selon un axe, il faut une excellente synchronisation entre les deux.

Le but de la présente invention est d'optimiser la recherche de la position des colis à saisir et de pouvoir déterminer leur orientation le plus rapidement possible.

La présente invention a plus particulièrement pour objet un procédé qui résout les problèmes ci-dessus.

Dans le procédé selon la présente invention, une fois qu'un premier colis a été identifié saisissable, le bras manipulateur vient immédiatement le saisir, l'identification d'un second colis saisissable s'effectue alors simultanément avec la manipulation du premier colis.

D'autres caractéristiques et avantages apparaîtront au cours de la description qui va suivre, donnée uniquement à titre d'exemple, faite en référence aux dessins annexés, dans lesquels :

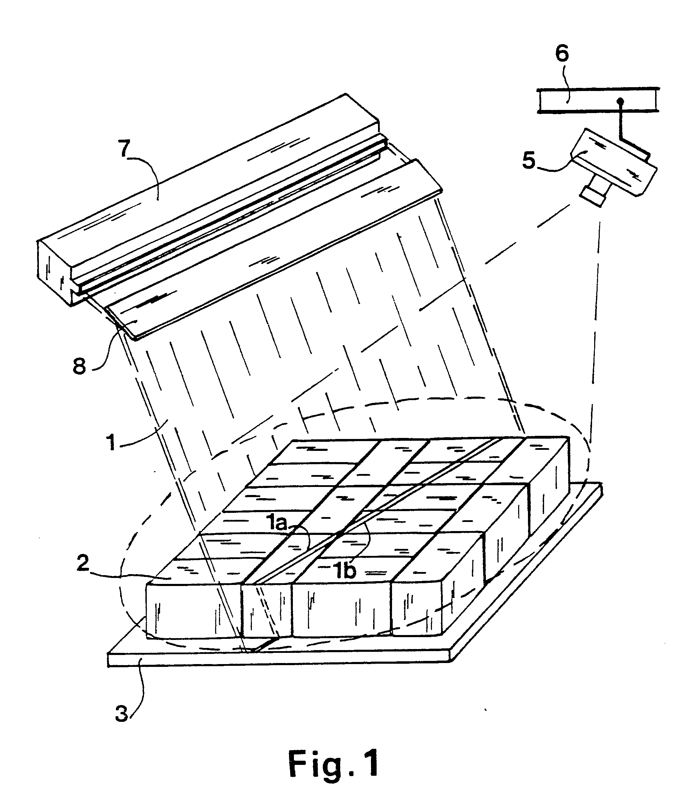

- la Fig. 1 est une vue du dispositif selon l'invention ;

- la Fig. 2 est une vue de la trace du faisceau réfléchie sur les colis.

Dans le procédé selon la présente invention, un faisceau plan de lumière cohérente 1, par exemple un faisceau laser, est émis sur les colis 2 obliquement par rapport à l'orientation du support 3 sur lequel ils sont posés, s'y réfléchit et est analysé par un capteur situé au-dessus desdits colis.

Le faisceau 1 est constitué d'au moins deux faisceaux laser plan 1a, 1b, dont la largeur est supérieure à la plus grande dimension du support 3.

Dans l'exemple de réalisation, le faisceau 1 est constitué de deux faisceaux laser plan 1a, 1b parallèles.

Le faisceau 1 traverse l'ensemble des colis verticalement. On analyse la trace dudit faisceau selon les plans horizontaux. Ainsi, par un simple calcul par triangulation, on détermine la hauteur de la couche de colis sur lequel le faisceau 1 s'est réfléchi.

La trace qui se réfléchit sur les colis est une double ligne brisée formée de plusieurs doubles raies, chaque double raie correspondant à un niveau différent de colis.

L'analyse de la longueur et de la position de ces raies dans l'espace permet de déterminer la position et l'orientation d'un colis saisissable par le bras manipulateur.

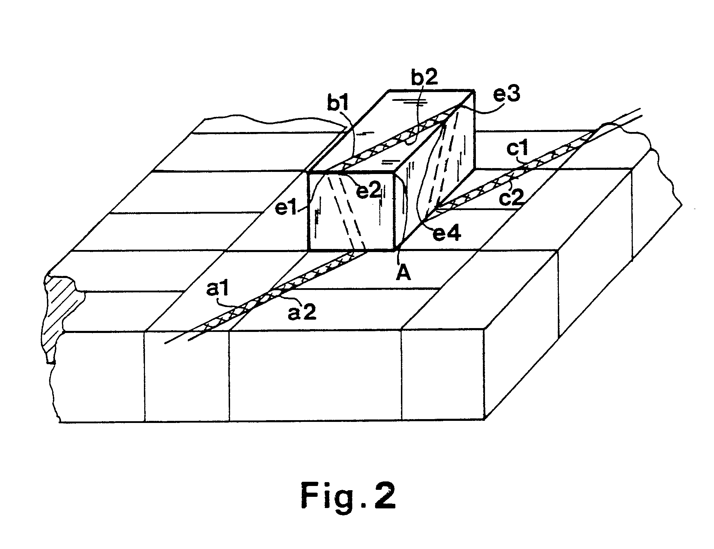

Dans l'exemple de réalisation représenté Fig. 2, la trace est constituée de trois doubles raies.

La première (a1, a2) et la troisième (c1, c2) ont des longueurs supérieures à celle de la diagonale du plus grand carré inscrit sur la surface des colis.

On est donc en présence de colis jointifs et il est impossible de repérer un colis saisissable sans risque pour le reste des colis.

En revanche, la raie (b1, b2) ayant une longueur inférieure à celle de la diagonale du plus grand carré inscrit sur la surface des colis, représente un colis saisissable.

L'analyse des coordonnées des points (e1, e2, e3 et e4,) extrémités des raies (b1, b2), permet de déterminer les coordonnées du coin A du colis et l'orientation de ses faces.

Ces informations sont alors transmises au bras manipulateur qui saisit ce colis.

Pendant cette opération, on déplace le faisceau sur les colis d'une façon déterminée par l'analyse de la trace précédente et même des traces précédentes, jusqu'à identifier un nouveau colis saisissable.

Dans le cas de la manipulation de colis cylindriques, un colis est considéré comme saisissable lorsque la longueur de la raie qui s'y réfléchit est inférieure ou égale au diamètre des colis.

L'analyse des coordonnées des extrémités des raies permet d'identifier les coordonnées du centre des colis.

Le dispositif permettant la mise en oeuvre du procédé décrit ci-dessus est le suivant.

Un capteur 5 est disposé au-dessus de l'ensemble des colis 2 sensiblement en son centre. Le capteur 5 est agencé de telle sorte qu'il permet de capter tout faisceau lumineux apparaissant sur une surface englobant au moins la totalité de la surface de la couche supérieure des colis 2.

Dans l'exemple de réalisation représenté, le capteur 5 est une caméra CCD dont la définition est choisie selon les précisions souhaitées.

Le capteur 5 est lié à un dispositif 6 d'acquisition et de traitement d'images permettant de transmettre les paramètres définissant la forme et la position d'un colis à saisir à un bras manipulateur (non représenté).

Un émetteur 7 est disposé également au-dessus de l'ensemble des colis 2. L'émetteur 7 est un émetteur qui permet de générer un faisceau plan 1, constitué d'au moins deux faisceaux laser plan (1a, 1b).

Un miroir tournant 8 est disposé au-dessus des colis 2, à l'encontre du faisceau 1 généré par l'émetteur 7, de manière à réfléchir ledit faisceau et le dirigé vers la couche supérieure des objets 2 à reconnaître.

Le miroir tournant 8 peut pivoter autour de son axe longitudinal et de son axe transversal.

Le miroir 8 est disposé de telle sorte que le faisceau diriger vers le colis 2 trace une ligne oblique faisant un angle de 40 à 50° par rapport à l'orientation du support 3.

Afin de pouvoir utiliser le dispositif selon l'invention dans tous les locaux sans que la lumière artificielle ou les reflets dus à la lumière naturelle ne perturbent les lectures effectuées par le capteur 5, un mode de réalisation de l'invention consiste à munir le capteur 5 d'un filtre interférentiel cadré sur la longueur d'ondes des faisceaux émis par l'émetteur 7.

Le dispositif selon l'invention ne nécessite pas une installation complexe. En effet, tous les éléments sont à poste fixe ; le seul organe en mouvement étant le miroir 8 qui ne fait que tourner sur lui-même.

Le dispositif selon l'invention permet un déplacement très rapide des raies, la rotation d'un miroir s'effectuant plus rapidement que son déplacement longitudinal.

Enfin, le dispositif est peu encombrant.

**Revendications**

1.- Procédé de reconnaissance de la position de colis (2) parmi un ensemble sur un support (3) au moyen d'un faisceau lumineux (1) émis obliquement par rapport à l'orientation du support (3) et analysé dans au moins un plan horizontal, caractérisé en ce que une fois qu'un premier colis à été identifié saisissable, un bras manipulateur vient immédiatement le saisir, l'identification d'un second colis saisissable s'effectuant simultanément avec la manipulation du premier colis.

2.- Procédé suivant la revendication 1 caractérisé en ce que le faisceau (1) est constitué d'au moins deux faisceaux laser plan 1a, 1b, dont la largeur est supérieure à la plus grande dimension du support (3).

3.- Procédé selon la revendication 2 caractérisé en ce qu'on envoie le faisceau (1) sur l'ensemble des colis (2) de manière à le traverser verticalement.

4.- Procédé selon la revendication 3 caractérisé en ce qu'on analyse la trace du faisceau (1) selon des plans horizontaux afin de déterminer par triangulation la hauteur de la couche de colis sur laquelle le faisceau (1) se réfléchit.

5.- Procédé selon la revendication 2 caractérisé en ce que la trace est constituée de doubles raies dont l'analyse de la longueur et des coordonnées de leurs extrémités permettent de déterminer les coordonnées d'un coin (A) et l'orientation des faces d'un colis parallélépipédique saisissable.

6.- Procédé selon la revendication 2 caractérisé en ce que la trace est constituée de doubles raies dont l'analyse de la longueur et des coordonnées de leurs extrémités permettent de déterminer les coordonnées du centre d'un colis cylindrique saisissable.

7.- Procédé selon l'une des revendications 2 à 6 caractérisé en ce qu'on déplace le faisceau (1) sur les colis (2) d'une façon déterminée par l'analyse des traces précédentes jusqu'à identifier un colis saisissable.

8.- Dispositif constitué par la combinaison d'un capteur (5) et d'un émetteur (7) permettant la mise en oeuvre du procédé selon l'une quelconque des revendications 1 à 7 caractérisé en ce qu'un miroir tournant est disposé au-dessus des colis (2) à l'encontre du faisceau (1) de manière à réfléchir ledit faisceau et le diriger vers la couche supérieure des objets (2).

9.- Dispositif selon la revendication 8 caractérisé en ce que le capteur (5) est lié à un dispositif d'acquisition et de traitement d'image.

10.- Dispositif selon l'une des revendications 8 ou 9 caractérisé en ce que le capteur (5) est muni d'un filtre interférentiel cadré sur la longueur d'onde du faisceau (1).

**Fig.1**

Fig. 2